# EUROPEAN PATENT APPLICATION

(11) **EP 4 391 280 A1**
(43) Date of publication of application: **26.06.2024**
(21) Application number: 22858423.1
(22) Date of filing: 12.08.2022
(51) Int. Cl.: H02J 7/00, B60L 53/30, B60L 53/53, H02J 7/34, H02J 13/00

(54) **RAPID-CHARGING DEVICE AND SYSTEM**

(30) Priority: 16.08.2021 JP 2021132413
(71) Applicant: Powerx, Inc., Tokyo, 107-6243 (JP)
(72) Inventor: ITO Masahiro, Tokyo 107-6243 (JP)
(74) Representative: Peters, Sebastian Martinus
(86) International application number: PCT/JP2022/030728
(87) International publication number: WO 2023/022102

(57) **Abstract**

[Problem] To provide a rapid-charging device that can be easily installed in various locations. [Solution] A rapid-charging device 100 for rapidly charging an electric vehicle 300, said rapid-charging device 100 comprising: a storage battery; a first converter that converts power from a commercial power source 200 and charges the storage battery; and a second converter that converts power from the storage battery, discharges the same to an on-vehicle storage battery of the electric vehicle 300, and rapidly charges the on-vehicle storage battery.

## Description

### TECHNICAL FIELD

The present invention relates to a charging device for rapidly charging an electric vehicle or the like and a system using the same.

### BACKGROUND

In recent years, for realization of an earth-conscious decarbonized society, there has been promoted the penetration of electricity-powered vehicles equipped with a storage battery, such as electric vehicles (EVs) and plug-in hybrid vehicles (PHVs) that are considered to be low in carbon dioxide emissions.

For the penetration of electric vehicles, it is essential to develop the social infrastructure for charging storage batteries. In today's Japan, however, the installation of rapid-charging devices has made little progress, and the proportion of installed rapid-charging devices to all installed charging devices is only about 30 percents in the current situation. General charging devices can be introduced to individual users' houses in an easy and less expensive manner and thus are relatively penetrated in the present. However, it takes about 20 hours to charge an electric vehicle by a general charging device, and the use of charging devices is frequently limited in complex housing such as apartments. Therefore, even with the progress of penetration of general charging devices, many people may refrain from purchasing electric vehicles for the reason of little convenience of the charging devices. On the other hand, rapid-charging devices with a discharge capacity of greater than 50 kW (for example, refer to Patent Literature 1) are highly convenient due to its capability of fully charging even a large-sized storage battery in a short period of time. However, such a rapid-charging device has problems that its installation requires making a special contract of electricity usage for business purposes with an electric power company and that the installation and maintenance of high-voltage power receiving substation equipment entails high cost.

### CITATION LIST

### PATENT LITERATURE

Patent Literature 1: JP 2015-012784 A

### SUMMARY OF THE INVENTION

### TECHNICAL PROBLEM

It is expected that the demand for rapid-charging devices will increasingly grow in the future, along with a rise in the penetration rate of electric vehicles and an increase in the capacities of storage batteries mounted in electric vehicles. However, the problems involved in the installation and maintenance described above constitute an obstacle to the penetration of rapid-charging devices. In view of this, a main object of the present invention is to provide a rapid-charging device that can be easily installed in various locations.

### SOLUTION TO THE PROBLEM

As a result of earnest studies on a solution to the above-described problems in the prior art, the inventor of the present invention has found that it is possible to easily install a rapid-charging device in locations where a commercial power source can be used by equipping the rapid-charging device with a large-capacity storage battery, enabling the storage battery to be charged by a low-voltage commercial power source, and enabling an electric vehicle to be rapidly charged with the power from the storage battery when necessary. Then, the inventor has arrived at a solution to the problems in the prior art on the basis of the above-described finding, and completed the present invention. Specifically, the present invention is configured as described below.

A first aspect of the present invention relates to a charging device. The charging device according to the present invention is configured to rapidly charge an external storage battery mounted in an electric vehicle or the like. The charging device according to the present invention includes a storage battery, a first converter that converts power from a commercial power source and charges the storage battery, and a second converter that converts power from the storage battery and discharges the converted power to the external storage battery to rapidly charge the external storage battery.

The charging device according to the present invention preferably discharges power five or more times greater than the power input from the commercial power source, to the external storage battery. For example, if the input power from the commercial power source is 20 kW, the discharged power from the charging device to the external storage battery is 100 kW or more.

The charging device according to the present invention preferably includes a housing in which the storage battery is stored and a wheel for supporting the housing. In particular, the wheel is preferably capable of being taken in and out of a storage space of the housing. For example, the wheel is stored in the housing when the charging device is in the installed state, and the wheel is taken out of the housing when the charging device is to be moved, so that the charging device can be easily moved using the wheel.

The charging device (a first charging device) according to the present invention may be electrically connectable to another charging device (a second charging device). The first and second charging devices are preferably the same in configuration. In this case, the first charging device preferably has a discharging destination selection unit for switching the discharging destination of the power from the storage battery between the external storage battery and the second charging device.

The charging device (the first charging device) according to the present invention may further include a supply destination selection unit for switching the supply destination of the power from the other charging device (the second charging device) between the storage battery of the own device and the external storage battery. Furthermore, the supply destination selection unit of the first charging device may be capable of switching the supply destination of the power from the second charging device among the storage battery of the own device, the external storage battery, and still another charging device (a third charging device).

The charging device (the first charging device) according to the present invention may include a power source sharing unit for switching the charging destination of the power from the commercial power source between the storage battery of the own device and the storage battery of the other charging device (the second charging device).

The charging device according to the present invention preferably further includes a controller that monitors charging/discharging information including the remaining power amount of the storage battery and the discharging frequency and a communication instrument that transmits the charging information to an external server device through a communication line.

A second aspect of the present invention relates to a system including the charging device according to the first aspect and a server device connected to a plurality of charging devices through a communication line. In the system according to the present invention, upon receipt of a request for charging the external storage battery from a user, the server device preferably generates information of a guide to the charging device to be provided to the user, based on the charging/discharging information received from the plurality of charging devices.

In the system according to the present invention, the server device may generate information on an appropriate location of the charging device, based on the charging/discharging information received from the plurality of charging devices.

### ADVANTAGEOUS EFFECTS OF THE INVENTION

According to the present invention, it is possible to provide a rapid-charging device that can be easily installed in various locations.

### BRIEF DESCRIPTION OF THE DRAWINGS

FIG. 1 is a schematic diagram illustrating an overview of a rapid-charging device according to the present invention.
FIG. 2 is a block diagram illustrating a functional configuration example of a rapid-charging device according to a first embodiment.
FIG. 3 is a schematic diagram illustrating an overview of a system including a plurality of rapid-charging devices and a server device.
FIG. 4 schematically illustrates the rapid-charging device including wheels.
FIG. 5 schematically illustrates rapid-charging devices according to a second embodiment. The rapid-charging devices according to the second embodiment have a function of coupling with other rapid-charging devices.
FIG. 6 is a block diagram illustrating a functional configuration example of the rapid-charging devices according to the second embodiment.

### DESCRIPTION OF EMBODIMENTS

Hereinafter, embodiments for carrying out the present invention will be described with reference to the drawings. The present invention is not limited to the following embodiments and includes modifications of the following embodiments that are made as appropriate within the bounds of being obvious to persons skilled in the art.

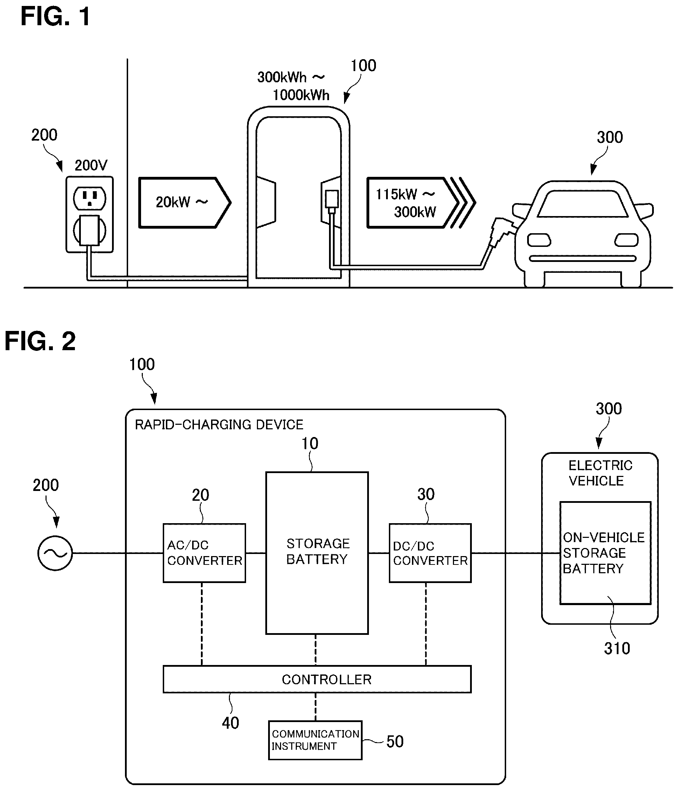

FIG. 1 schematically illustrates a basic mechanism of a rapid-charging device 100 according to the present invention. As illustrated in FIG. 1, the rapid-charging device 100 according to the present invention includes a large-capacity storage battery and charges the storage battery with low-capacity power from a general commercial power source 200. On the other hand, the rapid-charging device 100 can provide large-capacity power to an electric vehicle 300 such as an electric automobile and rapidly charge an on-vehicle storage battery included in the electric vehicle 300.

For example, in Japan, alternating current (100 A) is generally supplied by electricity utilities with a voltage of 100 V or 200 V. Therefore, if the voltage is 200 V, the amount of power input from the commercial power source 200 into the rapid-charging device 100 is 20 kW. Since the standard for the commercial power source 200 differs from country to country, the design of the rapid-charging device 100 is adjusted in compliance with each country's standard. For example, if the amount of power of the commercial power source 200 is 20 kW and the maximum capacity of the storage battery included in the rapid-charging device 100 is 300 kWh, the storage battery is fully charged in about 15 to 24 hours. On the other hand, in the case of discharging power from the rapid-charging device 100 to the electric vehicle 300, the rapid-charging device 100 can supply a large-capacity power of 115 to 300 kW to rapidly charge the on-vehicle storage battery of the electric vehicle 300 at a time. According to the rapid-charging device 100, it is possible to continuously charge the general on-vehicle storage batteries for eight to ten electric vehicles 300. In addition, even if the capacity of the storage battery in the rapid-charging device 100 becomes zero, the recharging of one electric vehicle 300 can be completed in about three hours with the power from the commercial power source 200.

In this manner, the rapid-charging device 100 according to the present invention can rapidly charge the on-vehicle storage battery of the electric vehicle 300 with a high-power output of 115 kW when being connected to the electric vehicle 300, while storing electricity in the storage battery through the use of the commercial power source 200 under a general low-voltage power receiving contract of 200 V. Since the commercial power source 200 is used as an input, the rapid-charging device 100 can be easily installed in any location with the commercial power source 200. For example, the rapid-charging device 100 of the present invention does not require a contract or construction work for high-voltage power receiving at the time of installation, unlike conventional general rapid-charging devices, and thus can be easily installed in various locations such as apartments, commercial facilities, hotels, parking lots, and others.

FIG. 2 illustrates a basic functional configuration of the rapid-charging device 100 according to the first embodiment. As illustrated in FIG. 2, the rapid-charging device 100 includes a large-capacity storage battery 10, an AC/DC converter 20, a DC/DC converter 30, and a controller 40 that controls the foregoing components. The storage battery 10 may be a lithium-ion battery or a phosphoric acid iron lithium-ion battery that has a maximum capacity of about 300 to 1000 kWh and exhibits high power output performance. The AC/DC converter 20 converts alternating-current power supplied from the commercial power source 200 into direct-current power, raises the voltage as necessary, and charges the storage battery 10. The DC/DC converter 30 converts direct-current power from the storage battery 10 into a voltage and current requested by the electric vehicle 300, raises the voltage as necessary, and discharges the electricity to an on-vehicle storage battery 310 of the electric vehicle 300.

The rapid-charging device 100 also includes the controller 40 connected to the storage battery 10, the AC/DC converter 20, and the DC/DC converter 30. For example, the controller 40 includes a voltmeter (not illustrated) that measures the voltage of the storage battery 10 and an ammeter (not illustrated) that measures the current input to the storage battery 10 and the current output from the storage battery 10, and determines the remaining power amount of the storage battery 10 from the value(s) of measurement by the voltmeter and/or the ammeter. The controller 40 can achieve information related to the usage frequency of the rapid-charging device 100 from the amount of discharging from the storage battery 10 and the number of counts of discharge from the storage battery 10. The usage frequency refers to the amount of discharging per unit time or the number of discharging counts per unit time. The controller 40 can also control the AC/DC converter 20 to adjust the current and voltage to input to the storage battery 10. Similarly, the controller 40 can control the DC/DC converter 30 to adjust the current and voltage to output to the on-vehicle storage battery 310. The controller 40 may include the function to communicate with a control device (not illustrated) mounted in the electric vehicle 300 in a wired or wireless manner to receive request information related to charging from the electric vehicle 300 and control the DC/DC converter 30 in accordance with the request information.

The rapid-charging device 100 also includes a communication instrument 50 to communicate with external devices. The communication instrument 50 includes a device to communicate with a server device through a communication line such as the Internet. The communication instrument 50 may also include a device to perform near-field wireless communication with the electric vehicle 300, a mobile terminal (smartphone or the like) owned by the user of the electric vehicle 300, or another rapid-charging device 100 under a publicly known standard such as Bluetooth^{®}. The communication instrument 50 may also include a GPS sensor to receive a signal from a positioning satellite and specify positional information of the own rapid-charging device 100.

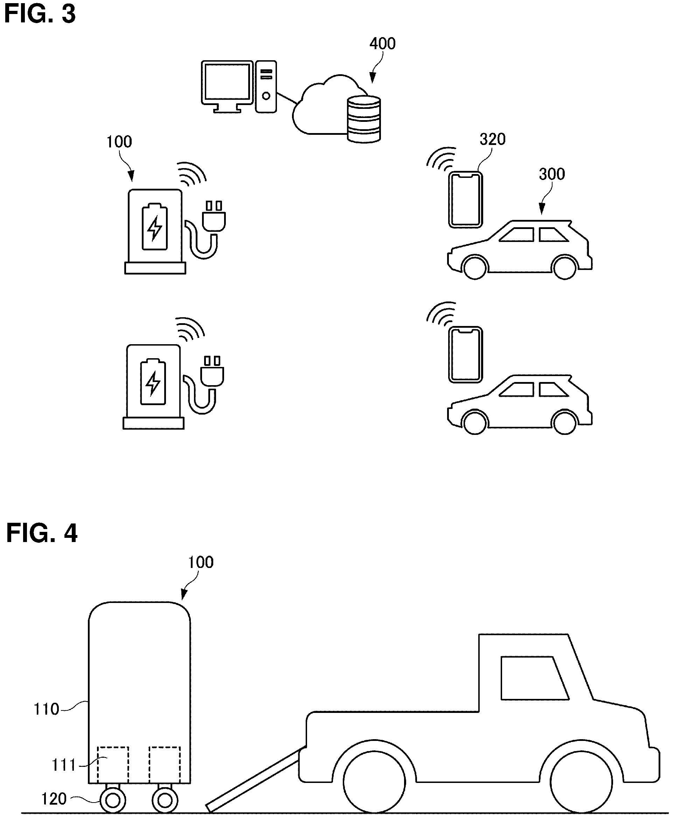

FIG. 3 illustrates an example of a system in which a plurality of rapid-charging devices 100 and a plurality of user terminals 320 are connected to a server device 400 through the Internet. Each user terminal 320 is a mobile terminal owned by the user riding in the electric vehicle 300. In this system, if each electric vehicle 300 itself has a communication function, the server device 400 can communicate with the electric vehicle 300 instead of communicating with the user terminal 320. The server device 400 manages and controls the entire system. The server device 400 is not necessarily constructed of one web server and may be configured such that its functions are distributed to a plurality of web servers and the administrator terminal operated by an operator.

The server device 400 mainly performs the usage authentication of each rapid-charging device 100, the control of each rapid-charging device 100, a navigation process for guiding the user to an appropriate rapid-charging device 100, and a billing process on the user terminal 320. Specifically, the rapid-charging device 100 installed in each location has its unique ID and transmits to the server device 400 the own positional information and information on the remaining battery amount and the usage frequency together with the ID. On the other hand, each user installs an application program dedicated to the system into the user terminal 320 and makes a user registration in accordance with instructions from this program. After the registration, the user can receive from the server device 400 by the user terminal 320, information on one or more rapid-charging devices 100 that are close to the user's location, have an appropriate remaining battery amount, and will keep the user wait only for a short time, for example. In addition, after reaching the installation location of the rapid-charging device 100, the user undergoes an authentication process by the server device 400 via the application program on the user terminal 320. When the user authentication succeeds, the charging of the electric vehicle 300 by the rapid-charging device 100 is started under the control of the server device 400. After the completion of the charging, the server device 400 charges the bill to the credit card registered in the application program on the user terminal 320 or the server device 400, in accordance with the amount of charging.

The status of all the rapid-charging devices 100 included in the system is under centralized control of the server device 400 in real time. For example, upon receipt of a request for charging the electric vehicle 300 from the user terminal 320, the server device 400 selects the rapid-charging device 100 suitable for charging the electric vehicle 300 of the user from the information related to the remaining battery amounts and discharge frequencies of the rapid-charging devices 100 and the positional information of the rapid-charging device 100 and the user terminal 320, and provides the user terminal 320 with the information of a guide to the selected rapid-charging device 100. For example, the rapid-charging device 100 closest to the user's current location may have a small remaining battery amount with which the electric vehicle 300 of the user cannot be sufficiently charged. In that case, the server device 400 selects the rapid-charging device 100 having the remaining battery amount enough to charge the electric vehicle 300, from among the rapid-charging devices 100 that can be reached with the remaining battery amount of the electric vehicle 300, and transmits to the user terminal 320 the information of a guide to the selected rapid-charging device 100. In addition, if the rapid-charging device 100 close to the user is used with high frequency and is considered not to be able of charging the electric vehicle 300 of the user soon, the server device 400 transmits to the user terminal 320 the information of a guide to the rapid-charging device 100 that is used with relatively low frequency and can be estimated to keep the user wait only for a short time.

The server device 400 may also have a reservation function related to the use of the rapid-charging device 100. Specifically, the server device 400 receives from the user terminal 320 the designation information of the rapid-charging device 100 (ID or the like) and reservation information related to the time of use of the rapid-charging device 100. In this case, the server device 400 controls the rapid-charging device 100 designated by the user terminal 320 to secure the remaining battery amount for charging at least one electric vehicle 300 until the designated time of use. Specifically, the discharging from the rapid-charging device 100 is restricted within a time frame before the designated time of use, and the rapid-charging device 100 is charged by the commercial power source 200. Accordingly, the user having made a reservation can securely use the designated rapid-charging device 100 at the reserved time. Even if it takes a relatively long time to charge the storage battery 10 as in the case of the rapid-charging device 100 according to the present invention, the user can efficiently use the reservation function to avoid the wait for charging the rapid-charging device 100.

The server device 400 may further has a navigation function to guide the user to the destination. In this case, if the user wishes to use the electric vehicle 300 to travel to the destination, it is preferable to create a route for guiding the electric vehicle 300 to the destination based on the remaining battery amount of the electric vehicle 300, the installation location of the rapid-charging device 100, and the usage status of the rapid-charging device 100. For example, when the electric vehicle 300 has a small remaining battery amount, if a route without the rapid-charging device 100 is suggested to the user, the remaining battery amount of the electric vehicle 300 may become zero before the arrival at the destination. Thus, the server device 400 selects a candidate for the rapid-charging device 100 that has a sufficient remaining battery amount and is highly possibly not used by another user when the electric vehicle 300 of the user passes by, based on the usage status of the rapid-charging devices 100, for example, and creates a route for guiding the user to pass by the candidate. If the rapid-charging device 100 is not installed near the destination designated by the user, the server device 400 transmits in advance an alert or the like to the user terminal 320 to urge the user to charge the electric vehicle 300 before the arrival at the destination.

The server device 400 can also monitor the usage status (mainly, the usage frequency) of all the rapid-charging device 100 to perform arithmetic processing for rearrangement of the rapid-charging devices 100. For example, in a region where the rapid-charging devices 100 are used with high frequency, there is high demand for charging service and there is a possibility that some users are awaiting for charging. On the other hand, in a region where the rapid-charging devices 100 are used with low frequency, there is low demand for charging service and there is a possibility of a surplus of electricity. Thus, the server device 400 collects information on the remaining battery amount and usage frequency (the amount of discharging or number of discharging counts per unit time) from the rapid-charging devices 100, and statistically processes the collected information to specify the regions with high demand for charging service and the regions with low demand for charging service. Then, the server device 400 makes a determination on rearrangement of the rapid-charging devices 100 in the regions with low demand for charging service to the regions with high demand for charging service. Specifically, the server device 400 determines which of the rapid-charging devices 100 is to be rearranged to which of the regions, and suggests the determination information to the administrator terminal of the operator or the like. This makes it possible to rearrange the rapid-charging devices 100 in the optimum locations according to the demand for electric power from time to time.

FIG. 4 illustrates an example of a method for transporting the rapid-charging device 100. As illustrated in FIG. 4, the rapid-charging device 100 according to the present invention includes a housing 110 that stores the storage battery 10 and others and wheels 120 that support the housing 110. In the example illustrated in FIG. 4, the wheels 120 can be stored in a storage space 111 inside the housing 110 and can be taken in and out as necessary. The wheels 120 may be automatically taken in and out by a mechanical mechanism or may be manually taken in and out. Accordingly, at the time of installation of the rapid-charging device 100, the wheels 120 can be stored inside the housing 110, and when the rapid-charging device 100 needs to be transported, the wheels 120 can be taken out of the housing 110 and used to load or unload the rapid-charging device 100 to or from a truck. In addition, the wheels 120 may not be able to be stored in the housing 110. In that case, lock mechanisms are attached to the wheels 120 to restrict the rotation of the wheels 120. In this manner, attaching the wheels 120 to the rapid-charging device 100 makes it easy to rearrange the rapid-charging device 100 in a suitable location in accordance with the demand for electric power described above.

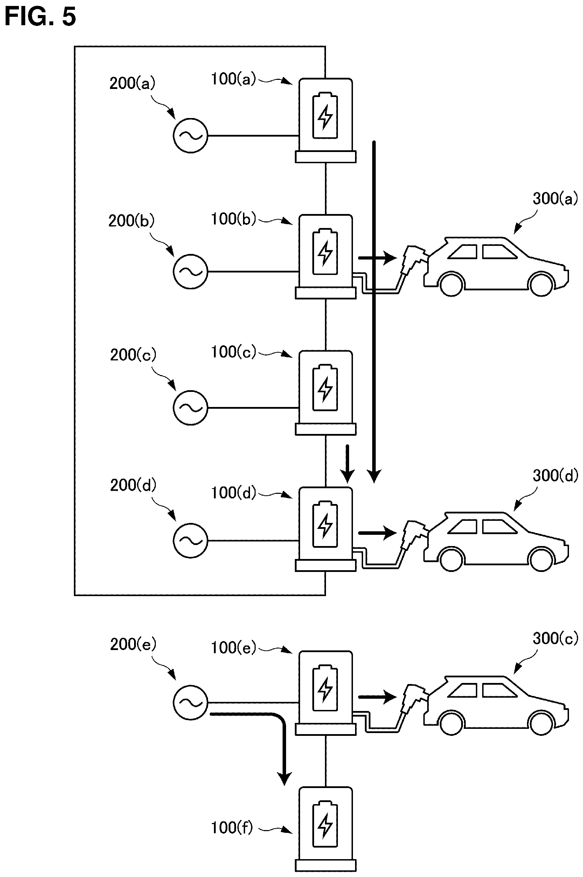

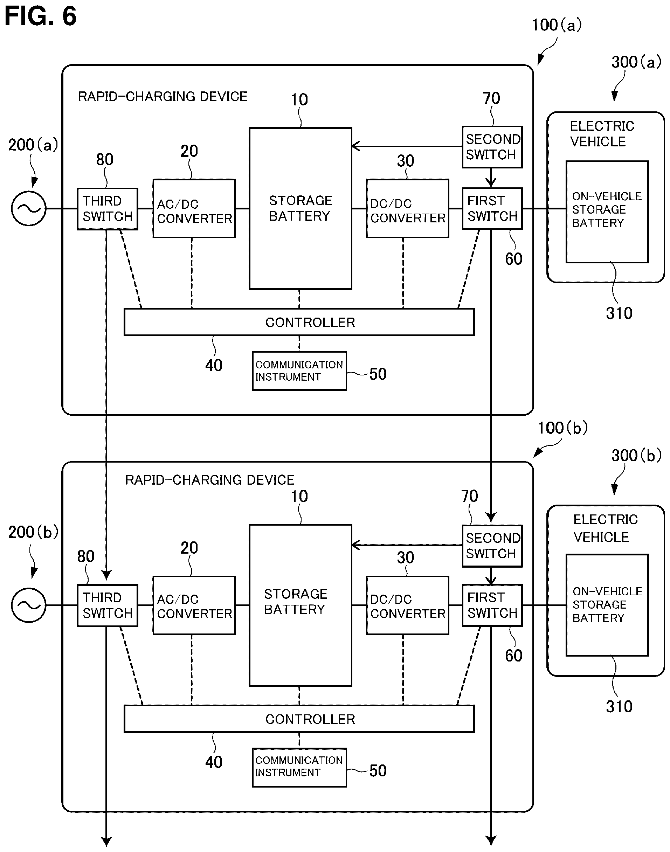

Subsequently, a second embodiment of the rapid-charging device 100 according to the present invention will be described with reference to FIGS. 5 and 6. In the second embodiment, each rapid-charging device 100 can be electrically coupled to another rapid-charging device 100 to supply power to the other rapid-charging device 100 and share the commercial power source 200 with the other rapid-charging device 100.

In the example illustrated in FIG. 5, a first rapid-charging device 100(a) to a fourth rapid-charging device 100(d) are connected to a first commercial power source 200(a) to a fourth commercial power source 200(d), respectively, and are connected in series in the order of the first to the fourth. The fourth rapid-charging device 100(b) can be connected to the first rapid-charging device 100(b) to form a circulatory system. In this example, the first rapid-charging device 100(a) supplies power form the own storage battery 10 to the fourth rapid-charging device 100(d). The second rapid-charging device 100(b) rapidly charges a first electric vehicle 300(a) with power from the own storage battery 10. The third rapid-charging device 100 supplies power from the own storage battery 10 to the fourth rapid-charging device 100(d), similarly to the first rapid-charging device 100(a). The fourth rapid-charging device 100(d) rapidly charges a second electric vehicle 300(b) with the power received from the first rapid-charging device 100(a) and the third rapid-charging device 100(c). Thus, even if the remaining power amount of the storage battery 10 in the fourth rapid-charging device 100(d) is lacking, the fourth rapid-charging device 100(d) can charge a second electric vehicle 300(b) connected thereto without a waiting time, by receiving power supply from the other rapid-charging devices 100 (a) and 100 (c) . In this manner, a group of rapid-charging devices 100(a) to 100(d) connected to each other can interchange the power in their respective storage batteries 10.

In the example illustrated in FIG. 5, a fifth rapid-charging device 100(e) and a sixth rapid-charging device 100(f) are connected to each other. The fifth rapid-charging device 100(e) is connected to a fifth commercial power source 200(e), but the sixth rapid-charging device 100(f) is not connected to the commercial power source 200 on its own. In this case, the power obtained from the fifth commercial power source 200 (e) can be supplied to the sixth rapid-charging device 100(f) through the fifth rapid-charging device 100(e). In this manner, a plurality of rapid-charging devices 100 can share one commercial power source 200.

FIG. 6 illustrates an example of a functional configuration of the rapid-charging devices 100 according to the second embodiment. In the example illustrated in FIG. 6, the first rapid-charging device 100(a) and the second rapid-charging device 100(b) are electrically connected together by a cable or the like. The first and second rapid-charging devices 100(a) and 100(b) have the basically same configuration. In the example of FIG. 6, first and second electric vehicles 300(a) and 300(b) are connected to the first and second rapid-charging devices 100(a) and 100(b), respectively. Among the components of the second embodiment illustrated in FIG. 6, the same components as those of the first embodiment illustrated in FIG. 2 are given the same reference signs as those in FIG. 2, and thus specific description thereof will be omitted. As illustrated in FIG. 6, the rapid-charging device 100 according to the second embodiment further includes a first switch 60, a second switch 70, and a third switch 80 in addition to the components of the first embodiment. The first to third switches 60, 70, and 80 are controlled by a controller 40.

The first switch 60 is intended to switch the output destination of high-output power converted by a DC/DC converter 30 mainly between an on-vehicle storage battery 310 of the electric vehicle 300 and another rapid-charging device 100 (specifically, the second switch 70). The second switch 70 is intended to switch the supply destination of high-output power input from another rapid-charging device 100 (specifically, the first switch 60) between the storage battery 10 of the own rapid-charging device 100 and the own first switch 60. Accordingly, in the example illustrated in FIG. 6, for example, the output destination of the power from the storage battery 10 of the first rapid-charging device 100(a) can be switched among mainly the following four:
[1] The on-vehicle storage battery 310 of the first electric vehicle 300(a) connected to the first rapid-charging device 100(a)
[2] The storage battery 10 of the second rapid-charging device 100(b)
[3] The on-vehicle storage battery 310 of the second electric vehicle 300(b) connected to the second rapid-charging device 100(b)
[4] Still another rapid-charging device 100 connected to the first switch 60 of the second rapid-charging device 100(b)

The first switch 60 may also have the function of switching the output destination of the power from the DC/DC converter 30 to the on-vehicle storage battery 310 of the electric vehicle 300 and switching the output destination of the power from the second switch 70 to still another rapid-charging device 100 connected to the first switch 60 at the same time. Specifically, as in the case of the second rapid-charging device 100(b) illustrated in FIG. 5, it may be necessary to supply the power received from the first rapid-charging device 100(a) to the third rapid-charging device 100(b) while rapidly charging the first electric vehicle 300(a) connected to the own second rapid-charging device 100(b). Thus, each rapid-charging device 100 preferably has the function of supplying (transferring) the power received from another rapid-charging device 100 to still another rapid-charging device 100 while rapidly charging the electric vehicle 300 connected to the own rapid-charging device 100. Accordingly, as in the example illustrated in FIG. 5, a plurality of rapid-charging devices 100 connected in series can freely interchange power to some extent.

The third switch 80 is intended to switch the charging destination of the power obtained from the commercial power source 200 between the own storage battery 10 and the storage battery 10 of another rapid-charging device 100. In the example illustrated in FIG. 6, the third switch 80 is arranged between the commercial power source 200 and the AC/DC converter 20. The third switch 80 of the first rapid-charging device 100(a) switches the input destination of the power from the commercial power source 200 between the own AC/DC converter 20 and the third switch 80 of the second rapid-charging device 100(b). Accordingly, the first commercial power source 200(a) can charge the storage battery 10 of the second rapid-charging device 100(b) through the first rapid-charging device 100(a). In this manner, since the plurality of rapid-charging devices 100 can share one commercial power source 200, it is effective to use the third switch 80 in the case where the commercial power sources 200 are limited in number.

As above, embodiments of the present invention have been described herein with reference to the drawings, for expressing the contents of the present invention. However, the present invention is not limited to the above-described embodiments and includes modified modes and improved modes that are obvious to a person skilled in the art based on the matters described herein.

### REFERENCE SIGNS LIST

- 10: Storage battery
- 20: AC/DC converter (first converter)
- 30: DC/DC converter (second converter)
- 40: Controller
- 50: Communication instrument
- 60: First switch
- 70: Second switch
- 80: Third switch
- 100: Rapid-charging device
- 110: Housing
- 111: Storage space
- 120: Wheel
- 200: Commercial power source
- 300: Electric vehicle
- 310: On-vehicle storage battery (external storage battery)
- 320: User terminal
- 400: Server device

## Claims

1. A charging device capable of rapidly charging an external storage battery, comprising:
a storage battery;
a first converter that converts power from a commercial power source and charges the storage battery; and
a second converter that converts power from the storage battery and discharges the converted power to the external storage battery to rapidly charge the external storage battery.

2. The charging device according to claim 1, wherein the charging device discharges power five or more times greater than the power input from the commercial power source, to the external storage battery.

3. The charging device according to claim 1, further comprising:
a housing in which the storage battery is stored; and
a wheel that supports inside of the housing.

4. The charging device according to claim 1, wherein the charging device is electrically connectable to another charging device, and the charging device has a discharging destination selection unit for switching a discharging destination of the power from the storage battery between the external storage battery and the other charging device.

5. The charging device according to claim 4, further comprising a supply destination selection unit for switching a supply destination of the power from the other charging device between the storage battery of the own device and the external storage battery.

6. The charging device according to claim 1, wherein the charging device is electrically connectable to another charging device, and the charging device has a power source sharing unit for switching a charging destination of the power from the commercial power source between the storage battery of the own device and the storage battery of the other charging device.

7. The charging device according to claim 1, further comprising:
a controller that monitors charging/discharging information including a remaining power amount of the storage battery and discharging frequency; and
a communication instrument that transmits the charging information to an external server device through a communication line.

8. A system comprising:
the charging device according to claim 7; and
a server device connected to a plurality of the charging devices through a communication line, wherein
upon receipt of a request for charging the external storage battery from a user, the server device generates information of a guide to the charging device to be provided to the user, based on the charging/discharging information received from the plurality of charging devices.

9. A system comprising:
the charging device according to claim 7; and
a server device connected to a plurality of the charging devices through a communication line, wherein
the server device generates information on an appropriate location of the charging device, based on the charging/discharging information received from the plurality of charging devices.
